(19) **Europäisches Patentamt**
**European Patent Office**
**Office européen des brevets**

(11) **EP 2 110 779 A1**

(12) **EUROPEAN PATENT APPLICATION**

(43) Date of publication:
**21.10.2009 Bulletin 2009/43**

(51) Int Cl.:
***G06N 7/00*** (2006.01)

(21) Application number: **08158809.7**

(22) Date of filing: **23.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.03.2008 EP 08153609**

(71) Applicant: **Nederlandse Organisatie voor Toegepast- Natuurwetenschappelijk Onderzoek TNO 2628 VK The Hague (NL)**

(72) Inventor: **The designation of the inventor has not yet been filed**

(74) Representative: **Hatzmann, Martin et al Vereenigde Johan de Wittlaan 7 2517 JR Den Haag (NL)**

(54) **Automated entry of conditional probability data for a decision support apparatus that uses a Bayesian belief network**

(57) A computer implemented method for filling in conditional probability data in a Bayesian Belief network based decision support apparatus is provided. The conditional probability data defines conditional probabilities of states of a particular network node as a function of vectors of state values of a set of parent nodes of the particular network node in the Bayesian Belief network. The computer implemented method comprising receiving conditional probability data defining the conditional probabilities for a subset of all possible vectors of combinations of state values of the set of parent nodes and interpolating conditional probability data defining the conditional probabilities for further possible vectors of state values of the set of parent nodes from the elicited conditional probability data.

Figure 5

**Description**

**Field of invention**

This invention relates to a decision support apparatus that uses a Bayesian belief network and to a method and an apparatus for computer aided elicitation of conditional probabilities for use in a Bayesian belief network of such a decision support apparatus.

**Background**

Computer based decision support based on Bayesian belief networks (BBNs) has been performed ever since the introduction of BBNs in the 1980s by Kim and Pearl (1983), and has found widespread use in the support of decision making.

A BBN is a known data structure to represent and reason with uncertainty in decision making processes. A BBN represents a directed a-cyclic graph (the network) consisting of nodes and arcs. The nodes represent the variables and the arcs the dependencies between the variables. An arc from node A to node B means that the probability of occurrence of the states of node B depends on the state of node A. In this case A is referred to as predecessor or parent of node B, and B in its turn as descendent or child of node A. The BBN makes it possible to compute the joint probability distribution for all the variables (nodes) in the belief network. This is done by determining for each variable $X_c$ its conditional probability distribution, where the conditioning variables - if any - are its parent nodes, denoted with $pa(X_c)$. The full joint probability distribution for all the variables in the network, $P(X_1, \dots , X_n)$, can then be derived as (Jensen, 2001)

$$P(X_1,...,X_n) = \prod_{c=1}^{n} P(X_c \mid pa(X_c)) .$$

Before it can be used, the BBN has to be constructed. The variables of the belief network and their discrete states must be defined, as well as the dependencies between the variables.

For a BNN of realistic problems construction of BBNs and quantification of its probabilities requires a formidable amount of work from experts. The number of probabilities that need to be specified for a node can grow large very easily. For a node with three states that has a parent node with also three states, 9 probabilities need to be specified to determine its conditional probability table (CPT). An additional second and third parent node with three states would consequently require a table of 27 and 81 probabilities, and so on. For many applications these probabilities need to be specified subjectively by experts. Apart from the huge amounts of time it would take to assess all the probabilities for large CPTs, it can also be questioned to what extent assessors can be expected to coherently provide the probabilities at the level of detail required.

The amount of human work can be kept at a minimum by use of a computer executing a dedicated software tool for construction the BBN and entering its conditional probabilities. However, thus far it has only proved possible to move part of the work into software tools. A major part of the construction work is the entry of conditional probabilities, all of which simply have to be entered by human experts in known software tools.

US patent application 2006020568 describes a known software tool that provides the functionality to construct a BBN (i.e. to define nodes and their states and the dependencies between these nodes), to quantify the network (i.e. to input the necessary conditional probabilities), and to perform inference on the network. This tool only provides an input module for the conditional probabilities needed without giving guidance and support in how to gather these probabilities, especially in the case when the probabilities are obtained via expert judgement elicitation.

None of the current software applications for developing and analysing BBNs provide support for the data collecting. The process of posing questions to experts to collect data is called elicitation. The elicitation task is considered a major obstacle in the use of BBNs (Druzdzel and Van der Gaag, 1995).

A number of solutions have been proposed for relieving the elicitation task for discrete BBNs can be relieved. A first solution is to make it easier for the assessors to provide the probabilistic assessments required. Van der Gaag, Renooij, Witteman, Aleman and Taal (1999) aim to achieve this by transcribing the conditional probabilities and using a scale containing both numerical and verbal anchors. But the effort needed to assess a full CPT using this method, though reduced, is still exponential in the number of conditioning variables.

A second solution for relieving the elicitation burden is to reduce the number of probabilistic assessments to be made. This can of course be achieved by reducing the number of conditions (parent nodes) or the number of states of the variables, but such reductions will often be undesirable (e.g. leading to loss of detail needed to inform a decision).

# EP 2 110 779 A1

Tang and McCabe (2007) take the approach of reducing the number of assessments to be made. These authors propose to elicit only part of the conditional probabilities required and use piecewise linear interpolation to approximate not-elicited conditional probabilities. Yet, Tang and McCabe restrict their method to work with binary variables only.

## Summary

Among others it is an object to provide for a method entering conditional probability data in a decision support apparatus that uses a Bayesian belief network, wherein the method that allows more of the work involved in defining conditional probabilities to be moved from human experts to a computer without expert knowledge.

According to one aspect a computer implemented method for filling in conditional probability data in a Bayesian Belief network based decision support apparatus is provided, wherein the conditional probability data defines conditional probabilities of states of a particular network node as a function of vectors of state values of a set of parent nodes of the particular network node in the Bayesian Belief network, the computer implemented method comprising

- receiving conditional probability data defining the conditional probabilities for a subset of all possible vectors of combinations of state values of the set of parent nodes;
- interpolating conditional probability data defining the conditional probabilities for further possible vectors of state values of the set of parent nodes from the elicited conditional probability data. By using interpolation, the number of state vectors for which conditional probability data has to be entered by an expert can be minimized.

In an embodiment, the step of receiving comprises

- inputting, for each state of the particular node, a list of vectors of state values of the set of parent nodes that result in a highest conditional probability of the state of the particular node;
- inputting, for each of the vectors of state values of the set of parent nodes that result in a highest conditional probability, first conditional probability data defining the conditional probability of the states of the particular node as a function of the state of the particular node. By specifically identifying this type of vector and its associated conditional probabilities, the conditional probability data values are provided between which the interpolation is performed that provide the most accurate interpolation results.

In an embodiment, the step of receiving comprises inputting, for extreme states of the particular node and each respective parent node, second conditional probability data defining the conditional probability of the extreme states when the respective parent node is in its most favorable and least favorable state for that extreme value respectively. This can be used to support interpolation.

In an embodiment, the step of interpolating comprises assigning influence factors to the further possible vectors of state values, and interpolating the conditional probability data for the further possible vectors from the conditional probability data for said subset, based on the influence factors. In this way, interpolation to any possible state vectors can be realized.

## Brief description of drawing

These and other objects and advantageous aspects of the invention will become apparent from a description of exemplary embodiments, using the following figures.

Figure 1    shows a system for construction of a BBN
Figure 2    shows a Graphical User Interface (GUI) of a BBN
Figure 3    shows information assumed available to and accessible by BBN software application.
Figure 4    shows a flowchart of prior art BBN software functionality to input a CPT.
Figure 5    shows a flowchart of the CPT input functionality.
Figure 6    shows flowchart of the ordering of the parent node states with respect to the influence the practice on the node of interest.
Figure 7    shows a flowchart of the determination of the probabilities of the CPT, the elicitation sequence of these and the actual acquisition of these probabilities.
Figure 8    shows an overview of BBN construction

## Detailed description of exemplary embodiments

In an embodiment an alternative input functionality for large CPTs in dedicated BBN software applications is provided. Rather than having to input all values for the CPTs one by one, this embodiment requires only a part of these large CPTs to be specified, thereby saving time and being less prone to input error.

In an embodiment an apparatus is provided that calculates all values of large CPTs based on a specification of only a part of this CPT. This apparatus makes it feasible to address the many occasions in which an expert has to asses the values of a large CPT one by one, previously considered infeasible due to the time needed for the specification and entry of all the probability values needed, the errors made inputting huge amounts of values, the discriminatory power required from the experts to tell apart the many (very) subtly different conditions and the requirements (mathematical) coherency puts on the conditional probabilities specified.

The apparatus also supports the process of eliciting the information needed from expert assessors to quantify a CPT, by providing the order in which the conditional probabilities should by assessed by the expert, in such a way as to minimize assessment bias due to the anchoring-and-adjustment heuristic.

Only part of the conditional probabilities needs to be inputted. In most applications this will mean the difference between the feasibility of inputting the CPT or not. Feasibility with respect to time needed to input the probabilities, the errors made by manually inputting the values, the time needed to elicit the probabilities from experts, the discriminatory power required from the experts to tell apart the many (very) subtly different conditions and with respect to the coherency of the conditional probabilities specified.

This document describes a methodology for deriving a node's CPT in the general case that the states of the node are ordered and the states of each of its parent nodes can be ordered with respect to the influence these parent nodes have on this node of interest. The method requires only a limited amount of probability assessments from experts to determine a node's full CPT; the number of probabilities to be assessed is linear in the number of parent nodes.

Implemented and incorporated in existing BBN software, this methodology provides the guidance and support needed to quantify BBNs with large conditional probability tables based on expert assessments.

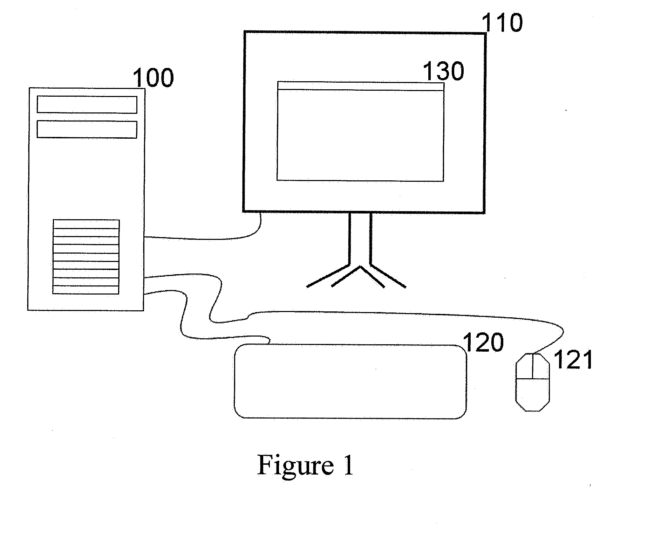

Figure 1 depicts a system for the construction and analysis of BBNs.

The system comprises a computer (100), coupled to a display device (110), and input devices keyboard (120) and pointing device (121). The computer may comprise with a mainboard, a CPU, harddrive and memory. A computer program for eliciting information to define a BBN is stored on the harddrive and executed by computer 100. This computer program will be termed BBN software application.

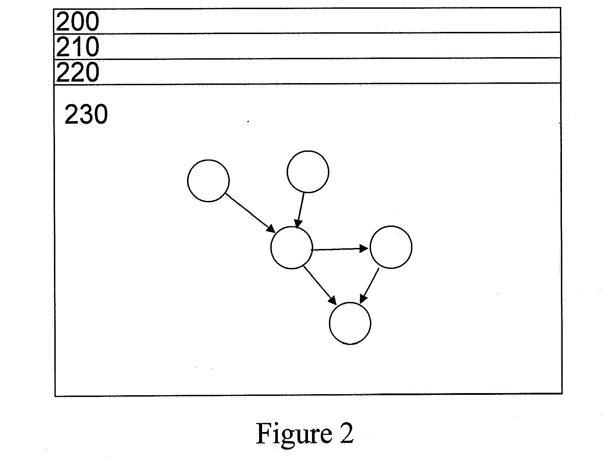

Figure 2 shows a schematic drawing of a typical Graphical User Interface (GUI) of a BBN software application. By way of example, the GUI contains a title bar (200), a menu bar (210) a tool bar (220) and a pane graphically displaying the BBN (230). For the qualitative phase of the construction of a BBN, BBN software applications typically support at least the functionalities:

Add node
Remove node
Rename node
Add state of a node
Remove state of a node
Rename state of a node
Change order of states of a node
Add arc
Remove arc

The quantitative phase of the construction of a BBN is typically supported by the functionality:

Modify the CPT of a node.

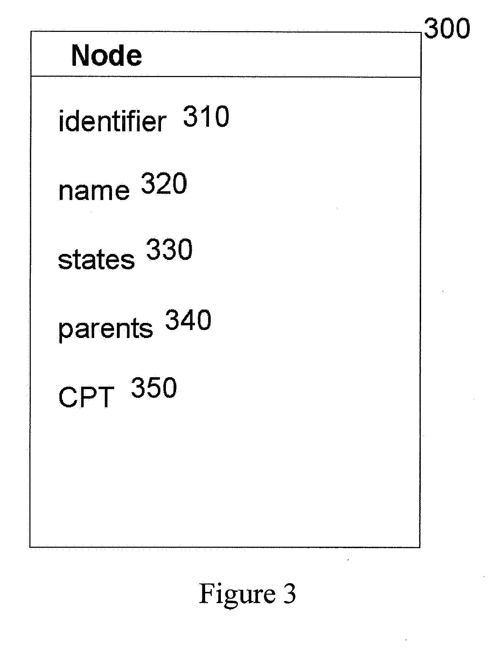

Figure 3 illustrates information about an instance of a BBN. In an embodiment we assume that the following information about an instance of a BBN in a particular BBN software application is available to and accessible by the application. The information comprises set of nodes (300) constituting the BBN, and for each node an information structure defining:

• A unique identifier for the node (310)
• A name of the node (320)
• The states of the node, constituted by an ordered list of state names with the highest state first (330)
• The parents of the node, constituted by a list of node identifiers of the parent nodes (340)
• The CPT of the node

The CPT is a data structure describing the probabilities of the occurrence of the states of the node, conditional on the states of the parent nodes.

When the computer executing the BBN software application constructs a BBN, nodes are constructed by creating information structures. When the computer executing the BBN software application constructs a node, its CPT is initially filled with default values for the unconditional probabilities for the states of the node (for example 0 or the reciprocal of the number of states of the node). Adding a state for the node will commonly result in adding an entry for this new state to the CPT with probability 0. Adding a parent for the node will typically result in making the CPT conditional on the states of this parent, by default using the same probabilities (that were already present in the CPT) for each state of the parent. Adding a state to one of the parent nodes of a node will also lead to creating the appropriate entries in the CPT for this added condition.

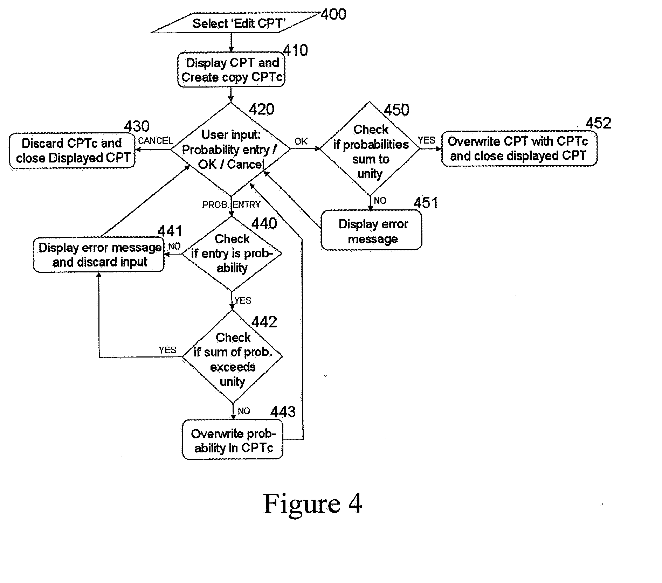

So for each node that is in the set of nodes of a BBN instance a CPT structure with default probabilities is assumed to be available. The input functionality for the CPT of a node that dedicated BBN software applications provide is graphically depicted by Figure 4.

When the computer executing the BBN software application receives a user input indicating that a user wishes to edit the CPT of a particular node (400), the computer first displays the CPT with its current (default) values (410), and create a of copy CPTc of the current CPT values. Then the computer executing the BBN software application waits for one of three types of user input:

1. Cancel: user input is received that the user wishes to cancel the editing of the CPT. The display of the CPT is closed (430), thereby discarding any changes.

2. The entry of a probability for a particular state s and a particular instance of parent node states s_p: the application will check whether the value received from the user in put is a probability (440) (i.e. the input value is in the interval [0, 1]). If not, the application will display an error message and discard the input (441) and wait again for new user input (420). If the value entered is a probability, the application will check whether the sum of probabilities of the states of the node for the particular condition does not exceed unity (442). If the sum of probabilities exceeds 1, an error message is displayed and the entry is discarded (441), if not the probability for state s and instance of parent node states s_p in CPTc is overwritten by the new value (443) and the application will wait again for new user input (420).

3. OK: user input is received that the user wishes to finalise the editing of the CPT. The application first checks whether for all conditions (i.e. all instances of states of parent nodes) the probabilities of the states of the node sum to unity (450). If not, the application displays an error message describing a condition for which the probabilities do not sum to unity and advises the user to correct the probabilities (451) and waits again for user input (420). If so (the probabilities sum to unity for all conditions), the application overwrites the values of the CPT with the new values from CPTc and closed the display of the CPT (452).

Known BBN software applications available have CPT input functionality similar to the one described in Figure 4. For known BBN software applications the probabilities that constitute a node's CPT will have to be entered one by one by the user. Alternatively most dedicated BBN software applications support importing CPT probabilities from other software like MS Excel. When the probabilities of a CPT are elicited from experts, these probabilities will have to be entered one by one in one software application or another.

In principle, the conditional probability of each state S of a node is conditional on a vector of states of the parent nodes of that node. The total number of possible vector values, that is, the number of possible combinations of states of the parent nodes equals the product of the counts of states of the respective parent nodes. If these counts would all be equal, the total number of possible vector values would depend exponentially on the number of parent nodes. As a result, the number of probabilities that would have to be entered can grow large very easily when the number of parents of a node increases, when the prior art input scheme for entering all probabilities is used as described above for Figure 4.

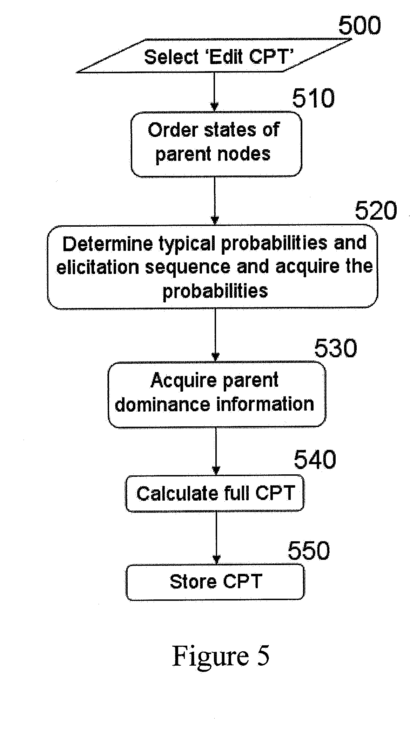

To overcome this problem an alternative way is provided to input values for the CPT of a node, depicted in Figure 5. When the user wishes to edit the CPT of a particular node the computer executing the BBN software application first re-orders the states of the parent nodes such that the influence of the parent node on the particular node under consideration (510) is monotonically non-decreasing or non-increasing in the list.

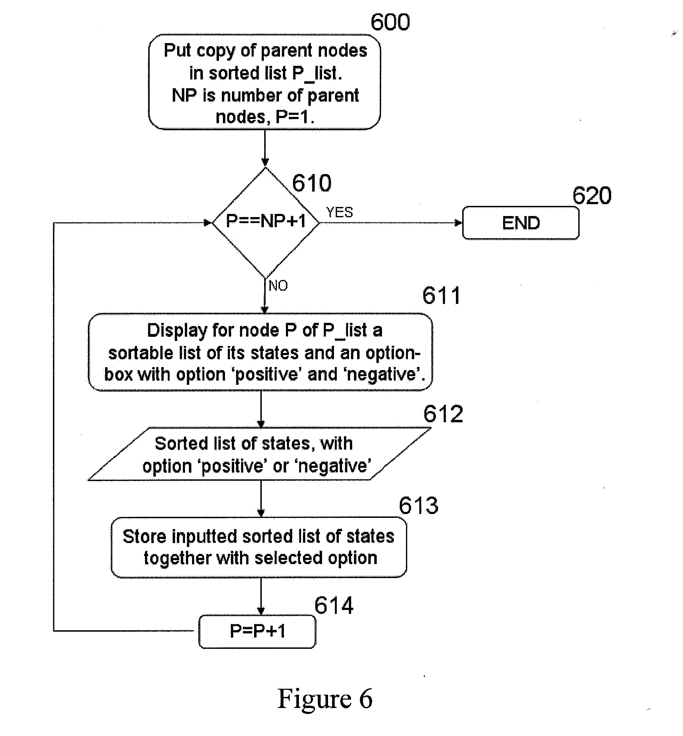

Figure 6 shows a flow chart of this task in more detail. First the computer executing the BBN software application makes a copy of all the parent nodes of the particular node and puts these in a sorted list (600). Then, for one parent node at a time (610, 614), the computer executing the BBN software application asks the user (611) to sort the states of the parent node (612). If the option 'positive' is selected by the user, then the parent's states will be inputted by the user in an order such that the probability of higher states of the node conditional on the current parent state Sp will not decrease if the state of the parent, Sp, is increased. The parent state with the highest probability for the highest state of the particular node is referred to as the highest parent state. If the option 'negative' is selected by the user, the inputted order of parent states will be such that the probability of higher states of the particular node conditional on the current parent state Sp will not increase if the state of the parent, Sp, is increased. In this case the parent state with the lowest probability for the highest state of the particular node is referred to as the highest parent state. The computer executing the BBN software application stores the inputted type of influence ('positive' or 'negative') and the inputted order of parent node states in a list with the highest state first in memory (613).

Then the computer executing the BBN software application determines a subset of conditional probabilities of the CPT that need to be inputted, the sequence in which they should be elicited from an expert, and finally acquires these probabilities (520).

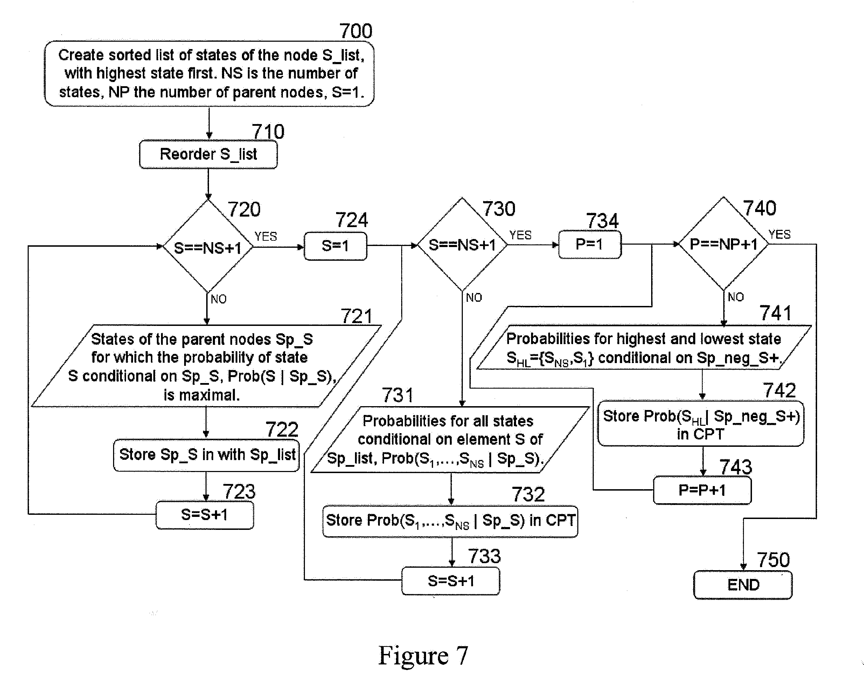

Figure 7 shows a flowchart of this task. First the computer executing the BBN software application creates a sorted list of the states of the particular node (700). If the states indicate values, or ranges of values, of a variable, the states may be ordered according to this value. Then an order of queries is optionally determined from this list (710) to minimize the risk of bias, introduced by (un)intentional use of the anchoring-and-adjustment heuristic by the expert, when the expert enters probabilities. For example, if the rank of the highest state is N, and of the lowest state 1, an order that minimizes bias is: N, 1, N-1, 2, N-3, 3,... until all the states are in the reordered list. Next the application 'walks' through this list from first to last element two times:

1. The first time for each state S of the particular node the expert is asked to indicate a combination of states Sp_S of the parent nodes that results in the highest conditional probability of the state S, among all possible combinations of states of the patent nodes (721) and the result is stored (722). Herein Sp_S are the states of the parent nodes that influence the node.

2. The second time the probabilities for all states of the particular node conditional on the combinations of parent states Sp_S specified in the previous loop, $Prob(S_1,...,S_{NS} \mid Sp\_S)$, are queried from the user (731) and stored in the CPT (732).

In loop (740, 743) evaluating one by one each parent node P, the computer executing the BBN software application queries the user (741) for the probability of the highest and lowest value state of the particular node, $S_H$ and $S_L$, conditional on the following states for the parent nodes: the condition wherein the parent node P is in its "most favourable state" and wherein all other parent nodes are in their "least favourable" state. The "most favourable" and "least favourable state" of a parent is determined as follows: if a parent node is determined to have a positive influence (in 612), its most favourable state is its highest state (the first state in the list of states for the parent in memory (613)) and its least favourable is its lowest state (the last state in the list). If a parent node is determined to have a negative influence (in 612), its most favourable state is its lowest state (the last state in the list of this parent's states) and its least favourable is its highest state (the last state in the list). The computer executing the BBN software application stores the probabilities of 741 in the node's CPT (742).

After acquiring these specific probabilities, the computer executing the BBN software application will ask the user to input for each parent node whether the parent node (530) is negative dominant (value -1) is positive dominant. (value 1) or is not dominant.(value 0). Herein a parent node of the particular node is said to be a positive dominant parent node when the conditional probabilities for states of the particular node do not depend on the state of its other parent nodes when the positive dominant parent node is in its most favourable state. Similarly, a parent node of the particular node is said to be a negative dominant parent node when the conditional probabilities for states of the particular node do not depend on the state of its other parent nodes when the positive dominant parent node is in its least favourable state.

It should be carefully noted that the amount input data in all these input steps grows at least proportionally to the number of parent nodes. This should be contrasted with the prior art input of conditional probabilities that grows exponentially with the number of parent nodes.

In step 540 the computer executing the BBN software application uses the information gathered at 510, 520 and 530 to calculate all the conditional probabilities of the CPT. The function 'calculate_CPT' may use the following six auxiliary functions (the CPT is assumed accessible by all functions):

**Function i_i(S):** calculates and returns the individual influence factor of the parent for state S. The rank of the lowest state is set to be 1, the rank of the highest state is then equal to the number of states of the parent, NS.

```
i_i=(rank(S)-1)/(NS-1)
IF the user has indicated that the parent has negative
effect on the node (see step 612, 613)
    i_i=1 - i_i
ENDIF
Return: i_i
```

**Function i_j(Sp):** calculates and returns the joint influence factor for the vector Sp of parent states.

```
i_j_d=0
```

```
i_j_n=0
FOR each parent
    NS = the number of states of this parent
    S = the state of this parent in Sp
    i_j_n= i_j_n+i_i(S)*(NS-1)
    i_j_d= i_j_d+(NS-1)
ENDFOR
i_j= i_j_n/ i_j_d
Return: i_j
```

**Function i_j_list(Sp_list):** calculates and returns a list of influence factors for the elements of Sp_list, which are vectors of parent states.

```
FOR each element Sp of Sp_list
    i_j=i_j(SP)
    add i_j to i_j_list
ENDFOR
Return: i_j_list
```

**Function prob_i(x, i_j_list):** calculates and returns probabilities for the states of the node for influence factor x, computed using a list of elements with influence factors for corresponding to elements of the Sp_List of vector of parent states. x must be in the interval [0,1].

```
low=0
high=1
FOR each element i_j of i_j_list
    IF i_j.influence_factor > low AND
        i_j.influence_factor <= x
        low=i_j
    ENDIF
    IF i_j.influence_factor <high AND
        i_j.influence_factor >= x
        high=i_j
    ENDIF
    prob_low=vector of probabilities for the parent
        states Sp for which the joint influence factor
        is equal to low. These probabilities can be
        retrieved from the CPT.
    prob_high= vector of probabilities for the parent
        states Sp for which the joint influence factor
        is equal to high. These probabilities can be
        retrieved from the CPT.
    IF high = = low
        prob_i=prob_low
    ELSE
        prob_i=((x-low)*prob_low+(high-x)* prob_high)
                /(high-low)
    ENDIF
    Return: prob_i
```

**Function prob_i_av(x, y, i_j_list):** calculates and returns the average probabilities for the states of the node on the influence factor interval [min(x,y), max(x,y)]

```
i_min=-99
i_max=-99
prob_i_x=prob_i(x, i_j_list)
prob_i_y=prob_i(y, i_j_list)
IF x < y
    i_min=x
    i_max=y
ELSE
    i_min=y
```

```
    i_max=x
ENDIF
i_int = list of influence factors consisting of the
element x and y
FOR each element i_j of i_j_list
    IF: i_j > i_min AND i_j < i_max
        add i_j to i_int
ENDFOR
SORT i_int from low to high
NI = number of elements of i_int
I=1
sum=0
WHILE I+1 <= NI
    A = element I of i_int
    B = element I+1 of i_int
    sum=sum+(B-A)*(prob_i(A, i_j_list)+prob_i(B,
i_j_list))/2
    I=I+1
ENDWHILE
prob_i_av=sum /(i_max - i_min)
Return: prob_i_av
```

**Function w_list(Sp_list):** calculates and returns a list of parent weights

Sp_neg = second element of Sp_list

dp_list = a list with for each parent the difference $P(S_H | Sp\_neg\_S+)$ - $P(S_H | Sp\_neg)$, specified in resp. 740-743 and 730-733.

dm_list = a list with for each parent the difference $P(S_L | Sp\_neg)$ - $P(S_L | Sp\_neg\_S+)$, specified in resp. 740-743 and 730-733.

sum_p = sum of the elements of dp-list

sum_m = sum of the elements of dm_list

FOR each parent

    dp_c = value in dp_list for current parent

    dm_c = value in dm_list for current parent

    w_c = .5*(dp_c/sum_p) + .5*(dm_c/sum_m)

    add w_c to list of parent weights w_list

ENDFOR

Return: w_list

The function 'calculate_CPT' calculates all the probabilities of the CPT using the CPT and Sp_list from 720-723.
**Function calculate_CPT(Sp_list, CPT)**

```
i_j_list=i_j_list(Sp_list)
w_list=w_list(Sp_list)
FOR each combination of parent states Sp_c from the CPT
      i_i_list = a list of individual influence factors
            for the parent node states in Sp_c using
            Function i_i(S).
      i_j = i_j(sp_c)
      NS = number of states of the variable
      prob = zero vector of length NS
       FOR each parent
            i_i = current parent individual influence
            factor from i_i_list
            w = current parent weight from w_list
            prob = prob + w*prob_i_av(i_i, i_j, i_j_list)
      ENDFOR
      STORE prob in CPT
ENDFOR
FOR each positive dominant parent
      Sp_pos = first element of Sp_list
      prob = retrieve the probabilities for the states
            conditional on Sp_pos from the CPT.
      FOR each combination of parent states Sp_c from the
          CPT
        IF the positive dominant parent has its
          highest state in Sp_c
            OVERWRITE the probabilities for this
                        condition in the CPT with
                        the probabilities
                        conditional on Sp_pos.
        ENDIF
      ENDFOR
ENDFOR
FOR each negative dominant parent
      Sp_neg = second element of Sp_list
      prob = retrieve the probabilities for the states
            conditional on Sp_neg from the CPT.
      FOR each combination of parent states Sp_c from the
          CPT
        IF the negative dominant parent has its
          lowest state in Sp_c
            OVERWRITE the probabilities for this
                        condition in the CPT with
                        the probabilities
                        conditional on Sp_neg.
        ENDIF
      ENDFOR
ENDFOR
```

The interpolation is further explained in the appendix of this description, which contains a copy of an article to be published by the inventors.

It may be noted that this results in values of the conditional probabilities that lead to reliable decisions when the BBN is used, because the CPT is anchored on the typical probabilities specified at 520 and the remaining conditional probabilities are derived via interpolation. This ensures a coherent specification of probabilities for the full CPT. For large CPTs one might even expect a far more coherent CPT using this algorithm than when all values would be specified one by one by an expert assessor.

Thus, the dependence on knowledge of experts to enter combined probabilities has been largely replaced by more complicated computations that do not depend on expertise, making it possible to shift more of the burden of determining the probabilities for use in a BBN decision support apparatus to a computer.

Finally, in step 550 the values of the CPT are overwritten with the values calculated at step 540.

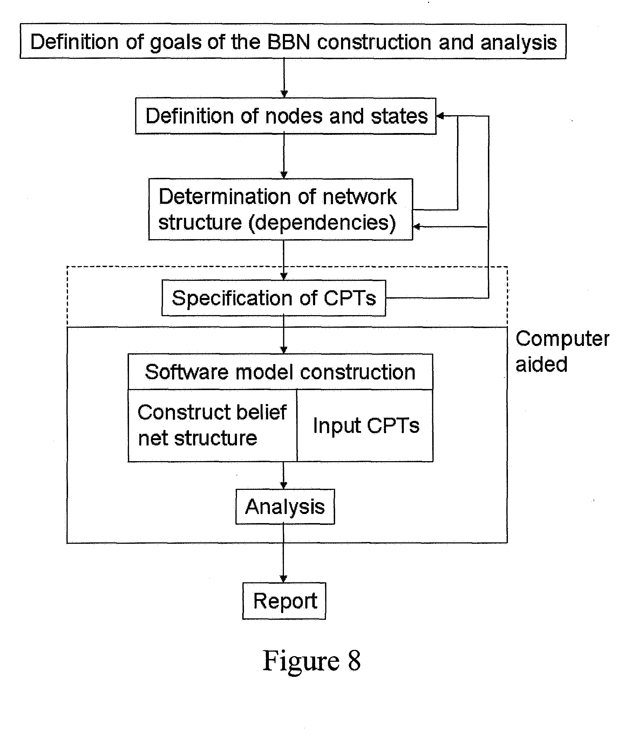

Figure 8 describes an overview of BBN construction comprising a first step wherein definition of goals of the BBN construction and analysis. After the first step a second step is executed comprising definition of nodes and states. After the second step a third step is executed comprising determination of network structure (dependencies). After the third step a fourth step is executed comprising specification of CPTs. After the fourth step a fifth step is executed comprising software model construction, construct belief net structure and input CPTs. After the fifth step a sixth step is executed comprising analysis. After the sixth step a seventh step is executed comprising report.

It should be appreciated that various alternative implementations are possible. For example, non-linear interpolation may be used instead of the linear interpolation employed in the example. This includes adjusting the method such that it can deal with synergetic effects between parent influences. A synergetic effect has place when the joint influence of parent variables is not equal to the sum of their individual influences. Furthermore, the program may be modified to deal with (dis)agreement of influence of parent variables. Currently disagreement of parent node influences is dealt with by averaging the probabilities over the interval bounded by a parents individual influence factor and the joint influence factor. Furthermore, there are many alternatives for determining the parent weights, including e.g. taking equal weights for all parents.

**References**

Druzdzel, M. J. & Van Der Gaag, L. C. (1995) Elicitation of probabilities for belief networks: combining qualitative and quantitative information. Proceedings of the eleventh conference on uncertainty in artificial intelligence.
Jensen, F. (2001) Bayesian Networks and Decision Graphs (Information Science and Statistics), Springer.
Kim, J. & Pearl, J. (1983) A computational model for causal and diagnostic reasoning in inference engines. 8th International Joint Conference on Artificial Intelligence. Karlsruhe, West Germany.
Tang, Z. & Mccabe, B. (2007) Developing complete conditional probability tables from fractional data for Bayesian belief networks Journal of Computing in Civil Engineering, 21, pp.265-276.
Wisse, B. W., Gosliga, S. P. V., Elst, N. P. & Barros, A. I. (2008) Relieving the elicitation burden of Bayesian belief networks.

Appendix

## Relieving the elicitation burden of Bayesian Belief Networks

B.W. Wisse, S.P. van Gosliga, N.P. van Elst, A.I. Barros

TNO Defence, Security and Safety

P.O. Box 96864, 2509JG The Hague

The Netherlands

## Abstract

In this paper we present a new method (EBBN) that aims at reducing the need to elicit formidable amounts of probabilities for Bayesian belief networks, by reducing the number of probabilities that need to be specified in the quantification phase. This method enables the derivation of a variable's conditional probability table (CPT) in the general case that the states of the variable are ordered and the states of each of its parent nodes can be ordered with respect to the influence they exercise. EBBN requires only a limited amount of probability assessments from experts to determine a variable's full CPT and uses piecewise linear interpolation. The number of probabilities to be assessed in this method is linear in the number of conditioning variables. EBBN's performance was compared with the results achieved by applying both the normal copula vine approach from Hanea & Kurowicka (2007), and by using a simple uniform distribution.

## 1 Introduction

In this paper we consider the case of deriving a discrete conditional probability distribution for a node of a Bayesian belief network based on expert judgement. There are many issues to consider when deriving a conditional probability distribution via expert judgement elicitation. The expert assessors will for example use simplifying heuristics when assessing probabilities to avoid too complex mental reasoning. These heuristics might lead to biased assessments. In addition experts might also be subject to various types of motivational biases. There is the problem of how to select the appropriate experts for the elicitation task and how to properly prepare them for formulating the assess-

ments (e.g. motivating and training them). There is the choice of which method to use to elicit the probabilities: e.g. a probability-scale, probability-wheel, gamble-like or adverb-probability matching method? Renooij (2001) gives a good overview of these issues. Though acknowledging their importance, in this paper we do not consider these issues, but focus on reducing the assessment burden of large discrete conditional probability distributions.

The number of probabilities that need to be specified for a node can grow large very easily. For a node with three states that has a parent node with also three states, 6 probabilities need to be specified to determine its conditional probability table (CPT). An additional second and third parent node with three states would consequently require a table of 18 and 54 probabilities, and so on. Apart from the huge amounts of time it would take to assess all the probabilities for large CPTs, it can also be questioned to what extent assessors can be expected to coherently provide the probabilities at the level of detail required (see e.g. (Miller 1956) on the limitations of human short term memory capacity). The elicitation task thus is considered a major obstacle in the use of BBNs (Druzdzel & Van der Gaag 1995, Jensen 1995).

There are two ways in which the elicitation task for discrete BBNs can be relieved. The first is to make it easier for the assessors to provide the probabilistic assessments required. Van der Gaag, Renooij, Witteman, Aleman & Taal (1999) aim to achieve this by transcribing the conditional probabilities and using a scale containing both numerical and verbal anchors. But the effort needed to assess a full CPT using this method, though reduced, is still exponential in the number of conditioning variables. The second option for relieving the elicitation burden is to reduce the number of probabilistic assessments to be made. This can of course be achieved by reducing the number of conditions (parent nodes) or the number of states of the variables, but such reductions will often be undesirable (e.g. leading to loss of detail needed to inform a decision).

The Noisy-OR model, originally introduced by Kim & Pearl (1983), but more extensively discussed in relation to BBNs by e.g. Heckerman & Breese (1996), reduces the number of probabilities to be specified by making additional assumptions about the underlying causal structure of the variables. For the noisy-OR model, the number of probabilities needed to determine the full CPT is linear in the number of conditioning variables, rather than exponential. Although this can mean a huge reduction in elicitation effort, the assumptions necessary are strong and all the variables in the noisy-OR model need to be binary, which strongly limits the applicability of the method.

The Noisy-MAX model (Díez 1993) can be seen as the extension of the Noisy-OR to multi-valued variables. In this model the CPT is derived from 'marginal conditional' distributions specified for each parent: for each parent the probabilities conditional on this parent node are specified and subsequently the full CPT is derived from these conditional probabilities using the max function. The influences of each of the parent nodes are treated in this model as independent. So the joint influence that the parent nodes exercise is fully determined by their marginal influence and a fixed function. Zagorecki & Druzdzel (2006) have fitted the Noisy-MAX model to suitable nodes from three belief networks for which the CPTs where already specified. The authors found the model to be able to provide a good fit to the CPT in about 50% of the cases they considered.

In this paper we develop and evaluate a methodology, EBBN, for deriving a node's CPT in the general case that the states of the node are ordered and the states of each of its parent nodes can be ordered with respect to the influence these parent nodes have on this node of interest. In this method only a (small) part of the CPT- describing the joint influence of the parents in contrast with the marginal influence elicited in the Noisy-MAX model - is elicited. The conditional probabilities that are not directly elicited are derived using an interpolation method based on the ranks of parent node states. The number of probabilities to be assessed is linear in the number of parent nodes. Since the method approximates the probabilities that are not directly assessed, it will contain inaccuracies. Like Van der Gaag et al. (1999) we therefore propose to regard and use this method as a first step in an iterative procedure of stepwise refinement of probability assessments, like described in (Coupé, Peek, Ottenkamp & Habbema 1999).

While testing this method three relevant alternatives were presented. Bonafede & Giudici (2007) have de-

veloped a method for deriving a discrete conditional probability distribution based on the marginal distributions, correlation coefficients and standardised joint moments. Yet, this method also requires all the variables to be binary, and closed-form solutions have only been derived for up to three conditioning variables (parent nodes). Secondly Hanea & Kurowicka (2007) provide a method for determining a CPT based on the copula vine approach (Bedford & Cooke 2002) that uses similar prior information: marginal distributions and adjusted (conditional) rank correlations. This method also provides a means for deriving the CPT in the general case that the variables are ordinal and the influences are monotone, although it is not clear to us if and how the prior assessments needed can be elicited accurately from experts. In Section 4 we compare the results of the method developed in this paper with the copula vine approach of Hanea & Kurowicka, for which the required prior assessments are derived from a fully specified CPT.

Very closely related to our method is the method presented by Tang & McCabe (2007). These authors also propose the use of piecewise linear interpolation to approximate not-elicited conditional probabilities. Furthermore they introduce the concepts of dominant and important factors, whilst we use positive and negative dominance and parent weights. Yet, where Tang & McCabe, like Bonafede & Giudici, restrict their method to work with binary variables only, the method we introduce in this paper works with discrete variables in general, under the above described conditions of ordinality of the variables. It should be noted that the development of our method has taken place independently of that of Tang & McCabe.

In the next section we will introduce our alternative elicitation method for BBNs, EBBN, which is aimed at reducing the elicitation burden. In Section 3 we discuss when we can regard an approximation of a CPT to be 'good', providing the means to assess the performance of the proposed method and compare it with the copula vine approach (Section 4). In the final section we present our conclusions and suggestions for future work.

## 2   The EBBN Method

We regard the problem of expert assessment of the probability distribution of a discrete variable $X_c$ (a node in a BBN), conditional on a set of two or more discrete variables, which we will denote with $pa(X_c)$ (the set of parent nodes). We require (1) the values of $X_c$ to be ordered, and (2) that the values of each of the elements of $pa(X_c)$ can be ordered such that each of these variables have either a positive or a negative

influence on $X_c$. By stating that $X_k \in pa(X_c)$ has a positive influence on $X_c$, denoted by $S^+(X_k, X_c)$, we mean that observing a higher value for $X_k$ does not decrease the likelihood of higher values of $X_c$, regardless of the values of the other variables $pa(X_c) \setminus X_k$. We take assignment $a = \{x_j, \ldots, x_u\}$ to be an instantiation of the set of $pa(X_c) = \{X_j, \ldots, X_u\}$. Formally we define $X_k \in pa(X_c)$ having a positive influence on $X_c$, $S^+(X_k, X_c)$, as (Wellman 1990): for all values $x_c$ of $X_c$, for all pairs of distinct values $x_{k,n} > x_{k,o}$ of $X_k$, and for all possible assignments $a_{\neg k}$ for the set of $pa(X_c) \setminus X_k$,

$$P(X_c > x_c \mid x_{k,n}, a_{\neg k}) \geq P(X_c > x_c \mid x_{k,o}, a_{\neg k}).$$

The definition of a negative influence, $S^-(X_k, X_c)$, is completely analogous and would involve only reversing the above inequality.

We define a conditioning variable $X_k \in pa(X_c)$ to be *positive dominant*, if the following two (sets of) assignments of $pa(X_c)$ lead to the same probabilities: (I) all assignments of $pa(X_c)$ in which $X_k$ is in its most favourable state for high values of $X_c$ and (II) the assignment in which each $X_l \in pa(X_c)$ is in its most favourable state for higher values of $X_c$ (i.e. all $X_p \in pa(X_c)$ with $S^+(X_p, X_c)$ are at their highest value, and all $X_n \in pa(X_c)$ with $S^-(X_n, X_c)$ are at their lowest value).

So if a positive dominant parent is in its most favourable state for high values of $X_c$, then, regardless of the states of the other parents, $X_c$ will have the same probabilities as when conditional on the assignment in which all parent nodes are in their most favourable state. *Negative dominant* variables are defined analogously.

In the remainder of this section we will first discuss the assessments needed from the expert for the derivation of the CPT of $X_c$. We will then show how to obtain the CPT from these assessments and end the section with an illustrative example of the method, taken from the Hailfinder network (Abramson, Brown, Edwards, Murphy & Winkler 1996).

### 2.1 Required assessments

It is assumed that the assessor has confirmed that the values of variable $X_c$ are ordered and that the assessor can order the values of each of the variables $X_k \in pa(X_c)$ such that (s)he judges either $S^+(X_k, X_c)$ or $S^-(X_k, X_c)$ to hold. Then the following assessments are required to determine the CPT for variable $X_c$ with conditioning variables $pa(X_c)$[1]:

---

[1]As mentioned in Section 1 we will not discuss here how these assessments can be best elicited from the assessor

1. (ordering). For each of the conditioning variables $X_k \in pa(X_c)$: order the values of $X_k$ such that $X_k$ has either a positive or a negative influence on $X_c$. Fix and record this ordering of the values and the nature of the influence.

2. (typical probabilities). For each of the values $x_c$ of $X_c$:

   (a) determine the assignment $pa(X_c) = a_{x_c}$ such that the probability $P(X_c = x_c \mid a_{x_c})$ is as large as possible.

   (b) assess the probabilities $P(X_c \mid a_{x_c})$.

   Due to dominance of one of the conditioning variables $a_{x_{c,min}}$ ($a_{x_{c,max}}$) need not be unique, where $x_{c,min}$ ($x_{c,max}$) is the lowest (highest) value of $X_c$. Therefore $a_{x_{c,min}}$ ($a_{x_{c,max}}$) is by default set to be the assignment in which all the conditioning variables are in their most favourable state for low (high) values of $X_c$, referred to as $a_{neg}$ ($a_{pos}$).

3. (weights). For each of the conditioning variables $X_k \in pa(X_c)$, assess $P(X_c = x_{c,max} \mid a_{neg,k+})$ and $P(X_c = x_{c,min} \mid a_{neg,k+})$, where $x_{c,max}$ and $x_{c,min}$ are resp. the maximum and minimum value of $X_c$, and $a_{neg,k+}$ is the assignment of $pa(X_c)$ in which $X_k$ is in its most favourable state for high values of $X_c$, and all $X_l \in pa(X_c) \setminus X_k$ are in their least favourable state for higher values of $X_c$.

4. (dominance). For each of the conditioning variables $X_k \in pa(X_c)$, determine whether $X_k$ has either no, a positive or a negative dominance over $X_c$.

### 2.2 Deriving the CPT

The derivation of the CPT of $X_c$ is done in a two-step procedure, using the assessments from Section 2.1. In the first step we will express the probabilities $P(X_c)$ as a function of an influence factor $i$. In the second step individual and joint influence factors are determined for all assignments of $pa(X_c)$, which are then used to derive the probabilities $P(X_c)$ from the functions of step 1.

The influence factor $i$ is an expression of the positiveness (or negativeness) of the joint influence of the parent variables $pa(X_c)$ on $X_c$. It is a function of values of the parent variables, with $0 \leq i(a) \leq 1$. We set $i(a_{neg}) = 0$, where $pa(X_c) = a_{neg}$ is the assignment in which all the conditioning variables are in their most favourable state for low values of $X_c$ (see item 2, Section 2.1). And, at the other extreme, $i(a_{pos})$ is set to 1. For all other assignments $i \in (0, 1)$. If assignment $a_2$ has a strictly more positive influence on $X_c$ than $a_1$

- i.e. $P(X_c > x_c \mid a_2) > P(X_c > x_c \mid a_1)$ for all $x_c$
- then the influence factor corresponding to $a_2$ should be bigger than the influence factor corresponding to $a_1$.

We make use of two separate influence factors: the *individual influence factor* $i_k$ for each conditioning variable $X_k \in pa(X_c)$ and the *joint influence factor* $i_{joint}$. As will become more clear later on, $i_k$ will contain information about the influences exercised by each of the parent variables individually, $i_{joint}$ about the 'general tendency' of all of the parent influences together.

We determine the individual influence factor $i_k$ for $X_k \in pa(X_c)$ as follows:

$$i_k(x_k) := \begin{cases} \dfrac{\mathrm{rank}(x_k) - 1}{\mathrm{rank}(x_{k,max}) - 1} & \text{if } S^+(X_k, X_c) \\ \dfrac{\mathrm{rank}(x_{k,max}) - \mathrm{rank}(x_k)}{\mathrm{rank}(x_{k,max}) - 1} & \text{if } S^-(X_k, X_c) \end{cases}$$

$$(1)$$

where the rank of the smallest value is set to be 1 and $x_{k,max}$ is the highest value of $X_k$. So if $X_k \in \{low, medium, high\}$ has a positive influence on $X_c$, we find that $i_k(low) = 0$, $i_k(medium) = 0.5$ and $i_k(high) = 1$.

The joint influence factor $i_{joint}$ for assignment $pa(X_c) = a$ is derived as:

$$i_{joint}(a) := \frac{\sum_{\{k: X_k \in pa(X_c)\}} i_k(x_k) \cdot (\mathrm{rank}(x_k) - 1)}{\sum_{\{k: X_k \in pa(X_c)\}} (\mathrm{rank}(x_{k,max}) - 1)} \quad (2)$$

Verify that indeed $i_{joint}(a_{neg}) = 0$ and $i_{joint}(a_{pos}) = 1$. Also note that the individual influence factor of $X_k$, $i_k$, is equal to the joint influence factor $i_{joint}$ if $pa(X_c) = \{X_k\}$, i.e. if the set of parents of $X_c$ merely consists of $X_k$.

### Step 1. Estimating $P(X_c)$ as a function of joint influence factor $i_{joint}$

In this step $P(X_c = x_c)$ is estimated as a function of joint influence factor $i_{joint}$, for each value $x_c$ of $X_c$. For this we use the orderings determined at item 1 in Section 2.1, and the assignments $a_{x_c}$ and probabilities $P(X_c = x_c \mid a_{x_c})$ assessed at 2. We construct the piecewise linear functions $f_{x_c} : [0,1] \to [0,1]$ through the points $(i_{joint}(a_{x_c}), P(X_c = x_c \mid a_{x_c}))$. It can be easily verified that using these linear interpolations ensures that $\sum_{x_c} f_{x_c}(i) = 1$, i.e. the sum of the probabilities of occurrence of the different values of $X_c$ equals unity for all $i \in [0,1]$. Coherency requires that if $x_{c,n} > x_{c,m}$, also $i_{joint}(a_{x_{c,n}}) > i_{joint}(a_{x_{c,m}})$. In Figure 1 an example is given for how this estimation of $P(X_c)$ as a function of $i_{joint}$ might look like. In this example $X_c \in \{low, medium, high\}$, and the

points $(i_{joint}(a_{x_c}), P(X_c = x_c \mid a_{x_c}))$ are assessed as in Table 1.

Figure 1: Piecewise linear functions through the points $(i_{joint}(a_{x_c}), P(X_c \mid a_{x_c}))$ from Table 1.

Table 1: Example assessments of $(i_{joint}(a_{x_c}), P(X_c \mid a_{x_c}))$ for $X_c \in \{low, medium, high\}$

| $x_c$ | $i_{joint}(a_{x_c})$ | $P(X_c \mid a_{x_c})$ |
|---|---|---|
| *low* | 0 | $P(X_c = low \mid a_{low}) = 0.79$ <br> $P(X_c = medium \mid a_{low}) = 0.20$ <br> $P(X_c = high \mid a_{low}) = 0.01$ |
| *medium* | 0.22 | $P(X_c = low \mid a_{medium}) = 0.35$ <br> $P(X_c = medium \mid a_{medium}) = 0.60$ <br> $P(X_c = high \mid a_{medium}) = 0.05$ |
| *high* | 1 | $P(X_c = low \mid a_{high}) = 0.01$ <br> $P(X_c = medium \mid a_{high}) = 0.14$ <br> $P(X_c = high \mid a_{high}) = 0.85$ |

Note that $pa(X_c) = a_{low}$ corresponds to the assignment $pa(X_c) = a_{neg}$ and $a_{high}$ to $a_{pos}$. Hence $i_{joint}(a_{low}) = 0$ and $i_{joint}(a_{high}) = 1$.

### Step 2. Deriving the conditional probabilities

In Step 1 we obtained $P(X_c)$ for all possible values of $i_{joint}$ via linear interpolation, and equation (2) provides us with an expression for $i_{joint}$ for all assignments $pa(X_c) = a$. We can now determine $P(X_c \mid a)$ via $P(X_c \mid i_{joint}(a))$ from the functions $f_{x_c}$ of Step 1. Yet this mapping from assignments $a$ for the conditioning variables $pa(X_c)$ to an expression $i_{joint}$ is not unique. Suppose $pa(X_c) = \{X_j, X_k, X_l\}$, $X_j$ and $X_l$ both exercise the same type of influence (positive or negative), and $X_j, X_k, X_l \in \{low, medium, high\}$, then $i_{joint}(\{medium, medium, medium\}) = i_{joint}(\{low, medium, high\}) = 0.5$. As pointed out earlier, $i_{joint}$ is an expression for the 'general tendency' of the influence of the conditioning variables. It does not take into account the (dis)agreement of the influences of each of the conditioning variables individually.

To account for both the 'general tendency' and the individual influences of the conditioning variables, we

calculate for each conditioning variable $X_k \in pa(X_c)$ the average of the probabilities $P_k(X_c \mid a)$ over the interval $(min(i_k(x_k), i_{joint}(a)), \ max(i_k(x_k), i_{joint}(a)))$. An example of this average, denoted with $\overline{P_k(X_c \mid a)}$, is illustrated in Figure 2.

Figure 2: Example of the average probabilities $\overline{P_k(X_c)}$, when $i_k(x_k) < i_{joint}(a)$

We derive the desired probabilities $\overline{P(X_c \mid a)}$ as the average over the distributions $\overline{P_k(X_c \mid a)}$. Or actually the *weighted* average

$$P(X_c \mid a) = \sum_{k:X_k \mid pa(X_c)} w_k \cdot \overline{P_k(X_c \mid a)}, \qquad (3)$$

since one parent could have a stronger influence on $X_c$ than another. For the same relative change in states, i.e. changes in states resulting in the same absolute change in each of the individual influence factors, the probabilities for $X_c$ might change more for one parent variable than for another. Therefore we calculate the weight $w_k$ for each parent $X_k \in pa(X_c)$, in the following way:

$$w_k = \frac{1}{2} \frac{\delta_k^+}{\displaystyle\sum_{l:X_l \in pa(X_c)} \delta_l^+} + \frac{1}{2} \frac{\delta_k^-}{\displaystyle\sum_{l:X_l \in pa(X_c)} \delta_l^-} \qquad (4)$$

with,

$$\delta_k^+ = P(X_c = x_{c,max} \mid a_{neg,k+}) - P(X_c = x_{c,max} \mid a_{neg})$$
$$\delta_k^- = P(X_c = x_{c,min} \mid a_{neg}) - P(X_c = x_{c,min} \mid a_{neg,k+}).$$

For the derivation of the weights we have taken the situation in which each parent is in its least favourable state for high values of $X_c$, $a_{neg}$, as the base. We use the probabilities $P(X_c = x_{c,max} \mid a_{neg,k+})$ and $P(X_c = x_{c,min} \mid a_{neg,k+})$ assessed at item 3 in Section 2.1. Each $\delta_k^+$ and $\delta_k^-$ now expresses the changes in the probabilities of resp. the highest and lowest state of $X_c$, if the one parent $X_k$ is set to its most favourable state for high values of $X_c$ whilst leaving the other parents in their least favourable states ($a_{neg,k+}$). We obtain the weights from these $\delta$'s via the normalisations (4).

To a large extent the choice of the base assignment $a_{neg}$ and the probabilities $P(X_c = x_{c,max} \mid a_{neg,k+})$ and $P(X_c = x_{c,min} \mid a_{neg,k+})$ to derive the weights is arbitrary. Even though, we feel the choice for these assignments is one of the most natural choices that can be made. And, more importantly, we feel these assignments are relatively easy for assessors to consider and assess. It is of course possible to use more assessments to determine the weights more accurately. However, we feel that the possible added value does not weigh against the burden of the extra elicitation effort needed.

We derive the desired probabilities $P(X_c \mid pa(X_c) = a)$ by rewriting (3) using (1), (2) and (4), as

$$P(X_c \mid pa(X_c) = a) = \sum_{k:X_k \mid pa(X_c)} w_k \cdot \frac{\displaystyle\int_{i_{min,k}}^{i_{max,k}} \mathbf{f}(i) \cdot di}{i_{max,k} - i_{min,k}} \qquad (5)$$

where $i_{min,k} = min(i_k(x_k), i_{joint}(a))$, $i_{max,k} = max(i_k(x_k), i_{joint}(a))$ and $\mathbf{f}(i) = \left( f_{x_{c,min}}(i), \dots, f_{x_{c,max}}(i) \right)$.

Finally, we deal with negative and positive dominance of one of the parent variables in the following straightforward way: for all the assignments $a_d$ in which a negative (positive) dominant parent is in its least (most) favourable state for high values of $X_c$, we set $P(X_c \mid a_d)$ to be equal to $P(X_c \mid a_{neg})$ ($P(X_c \mid a_{pos})$). We will now demonstrate the method by means of an illustrative example.

## 2.3 Illustrative example from the Hailfinder network

The example given in this section is based on the Comp-PlFcst variable from the Hailfinder network (Abramson et al. 1996). The variable and its parent nodes, AreaMeso_ALS, CldShadeOth, CldShadeConv and Boundaries, are depicted in Figure 3. For each of the variables also the states (discrete values) are given, ordered and with the highest state on top.

For the variable CompPlFcst we have the fully subjectively specified CPT, consisting of $4 \cdot 3^3 \cdot 3 = 324$ probabilities. In this example we derive the required assessments for EBBN, as specified in Section 2.1, from this CPT, but treat them as if they were directly elicited:

1. (ordering). The ordering of the states of the variables is given in Figure 3, where the highest states are on top. For the conditioning variables we find the following influences:

$S^-(\text{AreaMeso\_ALS,CompPlFcst})$; $S^+(\text{CldShadeOth,CompPlFcst})$;
$S^-(\text{CldShadeConv,CompPlFcst})$; $S^+(\text{Boundaries,CompPlFcst})$.

Figure 3: The variable CompPlFcst and its parent nodes from the Hailfinder network.

2. (typical probabilities). We find the assignments: $a_{DecCapIncIns} = \{StrongUp, \; Clear, \; None, \; Strong\}$, $a_{LittleChange} = \{StrongUp, \; PC, \; Some, \; Strong\}$ and $a_{IncCapDecIns} = \{Down, \; Cloudy, \; Marked, \; None\}$.

The corresponding conditional probabilities are given in Table 1 and depicted as a function of influence factor $i$ in Figure 1, where $a_{low} = a_{DecCapIncIns}$, $a_{medium} = a_{LittleChange}$ and $a_{high} = a_{IncCapDecIns}$.

3. (weights). As assessments of the remaining probabilities needed to derive the parent weights we find:

| $a_{neg,k+}$ | $P(X_c = x_{c,min} \mid a_{neg,k+})$ | $P(X_c = x_{c,max} \mid a_{neg,k+})$ |
|---|---|---|
| $a_{neg,\text{AreaMeso\_ALS}+}$ | 0.20 | 0.45 |
| $a_{neg,\text{CldShadeOth}+}$ | 0.40 | 0.30 |
| $a_{neg,\text{CldShadeConv}+}$ | 0.52 | 0.13 |
| $a_{neg,\text{Boundaries}+}$ | 0.65 | 0.05 |

4. (dominance). No (positive or negative) dominant parents.

Now we have all the information (containing only 17 probability assessments!) we need to derive all the 324 probabilities of the CPT of CompPlFcst.

By means of an example we calculate the probabilities $P(\text{CompPlFcst} \mid pa(\text{CompPlFcst}) = a_{expl})$, where $a_{expl} = \{\text{AreaMeso\_ALS}=Down, \; \text{CldShadeOth}=PC, \; \text{CldShadeConv}=None, \; \text{Boundaries}=Strong\}$. For these parent node states we find the individual influence factors: $i_{\text{AreaMeso\_ALS}}(Down) = 1$, $i_{\text{CldShadeOth}}(PC) = \frac{1}{2}$, $i_{\text{CldShadeConv}}(None) = 0$ and $i_{\text{Boundaries}}(Weak) = 0$, and a joint influence factor $i_{joint}(a_{expl}) = \frac{4}{9}$. So we see in this case that the individual influence factors of the parents give a diverse picture, two are very negative (0), one is between negative and positive ($\frac{1}{2}$) and one is very positive (1). This is reflected by the joint influence factor, which has a very average value (0.44), expressing no general tendency of the parent influences

towards either positive or negative influence.

Based on the assessments and (4), we find the weights: $w_{\text{AreaMeso\_ALS}} = 0.459$, $w_{\text{CldShadeOth}} = 0.303$, $w_{\text{CldShadeConv}} = 0.165$ and $w_{\text{Boundaries}} = 0.073$. We can now use (5) to derive the desired probabilities and find $P(\text{CompPlFcst} \mid pa(\text{CompPlFcst}) = a_{expl}) = \{0.17, 0.32, 0.51\}$. We can derive the full CPT of $X_c$ (consisting of 324 probabilities) in the same way, requiring in this case only 17 probabilities to be assessed. When we look up the probabilities in de original CPT, we find $P(\text{CompPlFcst} \mid pa(\text{CompPlFcst}) = a_{expl}) = \{0.20, 0.32, 0.48\}$. The probabilities estimated with the methodology are in this case 'not far off'. Yet, before we can assess how well our method approximates the directly assessed probabilities, we first need to discuss how we can measure the quality of the approximation.

## 3 Approximation of a CPT for a BBN, when is it 'good'?

Assuming you have knowledge of the 'true' probabilities of a certain CPT, how can you assess the quality of an approximation to that CPT? A measure to assess the similarity between two (discrete conditional) probability distributions, with possibly different support, is the Jensen-Shannon divergence (Lin 1991). Based on the Kullback-Leibler divergence, this measure does not take into account the context of the CPT, the belief network. Both Henrion (1989) and Chan & Darwiche (2002) show that inference in a belief network is most sensitive to assessment errors in probabilities that are close to zero or one.

Druzdzel & Van der Gaag (2000) state that, since inaccuracies will influence the output of the belief network, a natural question to ask is how accurate the approximation should be to arrive at satisfacory behaviour of the network. In other words: if the network is constructed to perform specific queries, does the use of approximations still lead to acceptable outcomes on these queries?

Chan & Darwiche (2002) identify three main approaches in the literature to measure the impact of a change in probability in a CPT: measuring the absolute change in the probability of a query, the relative change in the probability of a query or the relative change in the odds of the query, finding the first to be the most prevalent in the literature.

Zagorecki & Druzdzel (2006) give two measures to express the (dis-)similarity of two CPTs for the same conditional distribution: the Euclidian distance and the Kullback-Leibler divergence between the two CPTs. Time and space unfortunately have prohibited us to implement these measures in the current investi-

gation. We have used the following measures to assess the performance of the EBBN in the next section:

**m1.** Average absolute error in probability.

**m2.** Average Jensen-Shannon divergence: a measure of the similarity between the 'true' CPT and the approximation to it.

**m3.** Maximum Jensen-Shannon divergence.

**m4.** Number of unmatched certainties and impossibilities: the number of times the 'true' and the approximating CPT disagree on probabilities of 0 and 1. As noted above, queries can be very sensitive to extreme probabilities.

**m5.** % agreement in likelihood ranking: the percentage of scenarios in which the likelihood ranking of the values of the variable is the same for both the 'true' CPT as the approximating CPT. As scenarios all logically possible combinations of values of the neigbouring (i.e. predecessor and descendent) nodes are taken.

**m6.** % agreement on most likely state: the percentage of scenarios in which the most likely state for the variable is the same for both the 'true' CPT as the approximating CPT. As scenarios all logically possible combinations of values of the neigbouring (i.e. predecessor and descendent) nodes are taken.

## 4 Performance of EBBN

We have investigated the performance of the methodology by applying it to a well-known belief network from the literature that contained suitable large subjectively assessed CPTs, and comparing its performance with the copula vine approach from Hanea & Kurowicka (2007). We found the Hailfinder network (Abramson et al. 1996) to contain such CPTs.

### 4.1 Methodology

We have searched for belief networks that contained nodes that satisfy the following requirements:

- the CPT of the node was subjectively assessed,

- the CPT of the node has to be reasonably challenging in size for elicitation from an expert. For this we decided the node needed to have two or more parents, and

- the states of the node are ordered.

We found these networks are difficult to come by. This is not surprising of course, since these networks would require a huge elicitation effort. Practitioners would usually try to avoid having to specify these large CPTs because the elicitation process would be too time consuming, the very problem we are aiming to deal with in this article. In the BBN repository of the University of Pittsburgh[2] we found the Hailfinder network, which does contain 7 nodes that satisfy our requirements.

For the Hailfinder network we created three alternative versions. In each of these alternative versions we replaced the CPTs of the 7 nodes satisfying the above requirements (and kept the remaining CPTs as they were). In the first alternative implementation these CPTs were replaced with the approximations resulting from the method introduced in this paper. We treat the CPTs from the literature as the 'true' CPTs. We assume that the probabilities needed for our methodology would have been assessed as they are in these CPTs and treat the difference between approximations of the method and the corresponding CPTs as inaccuracies of the approximation. So we have *not* tried to find parameters for EBBN that minimise the distance of the resulting CPT to the original, but have derived the parameters needed from the original CPT.

The second alternative implementation has the selected 7 CPTs derived according to the copula vine approach (Hanea, Kurowicka & Cooke 2006). In this approach a normal copula vine is constructed based on the marginal distributions of each variable and its conditioning variables (or actually continuous versions of these discrete marginals) and (conditional) rank correlation coefficients of the variable with each of its conditioning variables. This normal copula vine specifies a joint distribution of the variable and its conditioning variables. Hanea & Kurowicka (2007) describe how the (conditional) rank correlation coefficients can be derived from a CPT. If one was to use the copula vine approach in practice, the marginal distribution of the variable under consideration and the (conditional) rank correlations with each of the conditioning variables would have to be subjectively assessed, which is not a trivial task. Since we are using the copula vine approach as a benchmark here, as a different means of approximating the 'true' CPT, we simply derived this marginal and the correlations from the 'true' CPT. The used marginal and correlations thus represent the best values that could have been obtained in an elicitation process. After construction we took a large sample (we used a sample size of 80,000) from the normal

---

[2] The belief network models can be found at the network repository of the Decision Systems Laboratory of the Univesity of Pittsburgh (http://genie.sis.pitt.edu/networks.html)

copula vine and estimated the desired copula vine version of the CPT from the frequencies in this sample. We checked that the marginal of the variable under consideration and the marginals of its parents were still as specified for the copula.

Finally we constructed a third alternative implementation of the Hailfinder network in which all altered CPTs consist of uniform distributions for all assignments of conditioning variables, to serve as a second benchmark. We have assessed the performance of our interpolation method and both benchmarks using the measures specified in Section 3. We found the variable InsInMt to be a positive dominant parent of CldShade-Conv, and treated it as such in all three alternative implementations.

### 4.2 Results

The results of the comparison of the 'true' versions of the selected 7 CPTs of the Hailfinder network with each of the three alternative derivations of these CPTs are given in Table 2 [3]. The table displays how the EBBN, copula vine and the uniform versions of the CPTs score on 9 performance measures. The first four measures are the measures m1.-m4. from Section 3 for the direct comparison between the 'true' and the approximating versions of the CPTs. The measures in the last five columns, m1.-m3., m5. and m6. from Section 3, consider posterior probabilities for each of the 7 selected nodes under all possible scenarios for neighbouring nodes, i.e. all logically possible combinations of states of neighbouring nodes (both parent and child nodes).

For the first seven measures in the table we have that the smaller the measure, the better the performance of the approximating CPT on that measure. For the last two columns to opposite holds: the higher the percentage, the better the performance. If a number is underlined in Table 2, this means that the corresponding approximating method (EBBN, copula vine or uniform) has the best performance for that measurement on that variable.

If we look at the underlined values in Table 2, it seems that EBBN and the copula vine versions are of comparable performance on all performance measures apart from 'unmatched 0/1', on which EBBN performs best on all CPTs. It is comforting to see that both EBBN and the copula vine approach clearly perform better than when the CPT is populated with merely uniform distributions. Further investigation reveals that the EBBN method scores relatively well on the so called 'collector' variables CombMoisture, CombVerMo

---

[3]The EBBN and copula vine versions of the Hailfinder network (.xdsl format) can be obtained from the authors.

and CombClouds. These are nodes in the Hailfinder network that "summarize information from different sources about moisture, vertical motion and clouds, respectively" (Abramson et al. 1996, p.69). The EBBN method seems a relatively good means to combine similar information from different sources, at least for the Hailfinder network.

## 5 Conclusions and discussion

In this paper we have developed a method for deriving large conditional probability tables based on expert judgement, that can hugely reduce the number of assessments needed from the experts. The quantitative assessments needed from the experts are relatively easy to understand: the experts still need to assess only probabilities. We believe that the experts will also be capable of providing the qualitative judgements described in Section 2.1 at items 1, 2(a) and 4.

In order to evaluate the performance of EBBN we applied it to a well-known belief network from the literature, the Hailfinder network. EBBN's performance was compared with the results achieved by applying both the normal copula vine approach from Hanea & Kurowicka (2007), and by using a simple uniform distribution. The results show that EBBN's performance is comparable to the the performance of the normal copula vine approach, and distinctly better than that of the uniform distributions. We believe that the EBBN method can be a valuable tool for subjectively specifying large CPTs.

In the development of the method, the application to a real-life example (the Hailfinder network) has proven very valuable. We would like to test the method on more examples. But, as noted before, because of cost and effort required to elicit large CPTs, these examples are difficult to find. Any help with finding more examples would be greatly appreciated.

It should be noted that the EBBN method does not always lead to a large reduction in the number of probabilities that need to be assessed. In fact, the method could even require more probabilities to be assessed than there are in the CPT. Roughly this occurs when the number of states of the variable for which the CPT is to be derived is greater than the number of conditions (i.e. the number of different assignments of the conditioning variables).

Finally we would like to remark that the interpolation used, in its current form, does not take into account synergetic effects that may exist between conditioning variables.

### Acknowledgements

We are grateful to the Institute of Applied Mathematics of the TU Delft for allowing us to use their Unicorn and Uninet software to derive the normal copula vine versions of the 7 CPTs of the Hailfinder network.

### References

Abramson, B., Brown, J., Edwards, W., Murphy, A. & Winkler, R. L. (1996), 'Hailfinder: a Bayesian system for forecasting severe weather', *International Journal of Forecasting* **12**, 57–71.

Bedford, T. J. & Cooke, R. M. (2002), 'Vines - a new graphical model for dependent random variables', *Annals of Statistics* **10**(4), 1031–1068.

Bonafede, C. & Giudici, P. (2007), 'Bayesian networks for enterprise risk assessment', *Physica A* **382**, 22–28.

Chan, H. & Darwiche, A. (2002), 'When do numbers really matter?', *Journal of Artificial Intelligence Research* (17), 265–287.

Coupé, V. M., Peek, N., Ottenkamp, J. & Habbema, J. D. F. (1999), 'Using sensitivity analysis for efficient quantification of a belief network', *Artificial Intelligence in Medicine* **17**, 223–247.

Díez, F. (1993), Parameter adjustment in Bayesian networks. the generalized noisy or-gate, *in* 'Proceedings of the 9th Conference on Uncertainty in Artificial Intelligence (UAI93)', Morgan Kaufmann, pp. 99–105.

Druzdzel, M. J. & Van der Gaag, L. C. (1995), Elicitation of probabilities for belief networks: combining qualitative and quantitative information, *in* 'Proceedings of the eleventh conference on uncertainty in artificial intelligence', pp. 141–148.

Druzdzel, M. J. & Van der Gaag, L. C. (2000), 'Building probabilistic networks: where do the numbers come from?', *IEEE Transactions on Knowledge and Data Engineering* **12**(4), 481–486.

Hanea, A. & Kurowicka, D. (2007), Mixed nonparametric continuous and discrete Bayesian belief nets, *in* 'Proceedings of the Fifth International Mathematical Methods in Reliability (MMR) Conference', Glasgow.

Hanea, A., Kurowicka, D. & Cooke, R. M. (2006), 'Hybrid method for quantifying and analyzing bayesian belief nets', *Quality and Reliability Engineering International* **22**(6), 613–729.

Heckerman, D. & Breese, J. (1996), 'Causal independence for probabilistic assessment and inference using Bayesian networks', *IEEE Transactions on Systems, Man and Cybernetics* **26**, 826–831.

Henrion, M. (1989), 'Some practical issues in constructing belief networks', *Uncertainty in Artificial Intelligence* **3**, 161–173.

Jensen, A. L. (1995), Quantication experience of a dss for mildew management in winter wheat, *in* M. J. Druzdzel, L. C. Van der Gaag, M. Henrion & F. Jensen, eds, 'Working Notes of the Workshop on Building Probabilistic Networks: Where Do the Numbers Come From?', pp. 23–31.

Kim, J. & Pearl, J. (1983), A computational model for causal and diagnostic reasoning in inference engines, *in* '8th International Joint Conference on Artificial Intelligence', Karlsruhe, West Germany, pp. 190–193.

Lin, J. (1991), 'Divergence measures based on the shannon entropy', *IEEE Trans. Inf. Theory* **37**, 145–151.

Miller, G. (1956), 'The magical number seven, plus or minus two: some limits on our capacity for processing information', *Psychological Review* **63**, 81–97.

Renooij, S. (2001), 'Probability elicitation for belief networks: issues to consider', *The Knowledge Engineering Review* **16:3**, 255–269.

Tang, Z. & McCabe, B. (2007), 'Developing complete conditional probability tables from fractional data for bayesian belief networks', *Journal of Computing in Civil Engineering* **21**(4), 265–276.

Van der Gaag, L. C., Renooij, S., Witteman, C., Aleman, B. & Taal, B. (1999), How to elicit many probabilities, *in* 'Proceedings of the Fifteenth Conference on Uncertainty in Artificial Intelligence 1999', pp. 647–654.

Wellman, M. P. (1990), 'Fundamental concepts of qualitative probabilistic networks', *Artificial Intelligence* **44**(3), 257–303.

Zagorecki, A. & Druzdzel, M. J. (2006), Knowledge engineering for Bayesian networks: How common are Noisy-MAX distributions in practice?, *in* G. Brewka, S. Coradeschi, A. Perini & P. Traverso, eds, 'ECAI 2006, 17th European Conference on Artificial Intelligence.', pp. 482–488.

Table 2: Performance of the three approximation methods on the measures specified in Section 3

| | regarding CPT | | | | regarding posteriors in scenarios | | | | |
|---|---|---|---|---|---|---|---|---|---|
| Variable | av abs diff | av Je-Sh | max Je-Sh | unmatched 1/0 | av abs diff | av Je-Sh | max Je-Sh | same likelh ranking | same most likely state |
| EBBN | | | | | | | | | |
| CombVerMo | 0.074 | 0.028 | 0.099 | 0 (256) | 0.034 | 0.002 | 0.025 | 93.6% | 96.8% |
| CombMoisture | 0.029 | 0.010 | 0.045 | 3 (64) | 0.205 | 0.031 | 0.663 | 72.0% | 82.4% |
| AreaMoDryAir | 0.056 | 0.035 | 0.148 | 9 (64) | 0.221 | 0.030 | 0.178 | 61.0% | 82.0% |
| CombClouds | 0.061 | 0.021 | 0.127 | 0 (27) | 0.251 | 0.025 | 0.164 | 78.1% | 82.8% |
| CldShadeOth | 0.131 | 0.058 | 0.188 | 18 (144) | 0.361 | 0.047 | 0.254 | 60.8% | 70.9% |
| CldShadeConv | 0.071 | 0.034 | 0.219 | 1 (36) | 0.223 | 0.029 | 0.235 | 62.5% | 73.8% |
| CompPlFcst | 0.065 | 0.013 | 0.064 | 0 (324) | 0.044 | 0.003 | 0.085 | 91.0% | 92.4% |
| | | | | | | | | | |
| Copula vine | | | | | | | | | |
| CombVerMo | 0.090 | 0.053 | 0.314 | 76 (256) | 0.039 | 0.002 | 0.037 | 92.0% | 95.2% |
| CombMoisture | 0.075 | 0.040 | 0.153 | 7 (64) | 0.274 | 0.037 | 0.607 | 60.0% | 73.6% |
| AreaMoDryAir | 0.053 | 0.023 | 0.072 | 16 (64) | 0.195 | 0.019 | 0.094 | 61.0% | 84.0% |
| CombClouds | 0.105 | 0.043 | 0.133 | 1 (27) | 0.315 | 0.036 | 0.240 | 76.6% | 78.1% |
| CldShadeOth | 0.103 | 0.040 | 0.127 | 23 (144) | 0.279 | 0.032 | 0.265 | 78.1% | 83.3% |
| CldShadeConv | 0.056 | 0.015 | 0.067 | 2 (36) | 0.157 | 0.012 | 0.079 | 71.2% | 78.8% |
| CompPlFcst | 0.143 | 0.069 | 0.408 | 0 (324) | 0.085 | 0.012 | 0.428 | 86.9% | 88.3% |
| | | | | | | | | | |
| Uniform | | | | | | | | | |
| CombVerMo | 0.219 | 0.234 | 0.549 | 76 (256) | 0.120 | 0.021 | 0.229 | 82.4% | 82.4% |
| CombMoisture | 0.130 | 0.117 | 0.415 | 7 (64) | 0.797 | 0.205 | 0.549 | 23.2% | 23.2% |
| AreaMoDryAir | 0.238 | 0.273 | 0.520 | 16 (64) | 0.819 | 0.218 | 0.524 | 25.0% | 25.0% |
| CombClouds | 0.289 | 0.199 | 0.408 | 1 (27) | 0.810 | 0.188 | 0.445 | 28.1% | 29.7% |
| CldShadeOth | 0.293 | 0.225 | 0.459 | 23 (144) | 0.747 | 0.175 | 0.550 | 26.2% | 41.5% |
| CldShadeConv | 0.149 | 0.092 | 0.250 | 2 (36) | 0.404 | 0.072 | 0.274 | 31.2% | 50.0% |
| CompPlFcst | 0.142 | 0.063 | 0.253 | 0 (324) | 0.089 | 0.011 | 0.315 | 83.4% | 85.4% |

underlined: best score for the three methods.

**Claims**

1.  A computer implemented method for filling in conditional probability data in a Bayesian Belief network based decision support apparatus, wherein the conditional probability data defines conditional probabilities of states of a particular network node as a function of vectors of state values of a set of parent nodes of the particular network node in the Bayesian Belief network, the computer implemented method comprising

    - receiving conditional probability data defining the conditional probabilities for a subset of all possible vectors of combinations of state values of the set of parent nodes;
    - interpolating conditional probability data defining the conditional probabilities for further possible vectors of state values of the set of parent nodes from the elicited conditional probability data.

2.  A computer implemented method according to claim 1, wherein said receiving comprises

    - inputting, for each state of the particular node, a list of vectors of state values of the set of parent nodes that result in a highest conditional probability of the state of the particular node;
    - inputting, for each of the vectors of state values of the set of parent nodes that result in a highest conditional probability, first conditional probability data defining the conditional probability of the states of the particular node as a function of the state of the particular node.

3.  A computer implemented method according to any one of the preceding claims, wherein said receiving comprises inputting, for extreme states of the particular node and each respective parent node, second conditional probability data defining the conditional probability of the extreme states when the respective parent node is in its most favorable and least favorable state for that extreme value respectively.

4.  A computer implemented method according to any one of the preceding claims, wherein said interpolating comprises assigning influence factors to the further possible vectors of state values, and interpolating the conditional probability data for the further possible vectors from the conditional probability data for said subset, based on the influence factors.

5.  A computer implemented method according to any one of the preceding claims, comprising inputting an order of states of parent nodes of the particular node, according to increasingly or decreasingly positive or negative influence of the state of the parent node on the state of the particular node.

6.  A computer implemented method according to any one of the preceding claims, comprising inputting information indicating for each part node of the particular node whether it is positively or negatively dominant over the particular node.

7.  A decision support apparatus, comprising an input module configured to enter conditional probability data for the nodes of a Bayesian Belief network, configured to enter the conditional probability data according to any one of the preceding claims.

8.  An input module for a decision support apparatus, configured to enter conditional probability data for the nodes of a Bayesian Belief network, configured to enter the conditional probability data according to any one of claims 1-6.

9.  A computer program product, comprising a program of instructions for a programmable computer which, when executed by the programmable computer, cause the programmable computer to perform the method of any one of claims 1-6.

Figure 1

Figure 2

**Node**

identifier 310

name 320

states 330

parents 340

CPT 350

300

Figure 3

Figure 4

500

Select 'Edit CPT'

510

Order states of
parent nodes

520

Determine typical probabilities and
elicitation sequence and acquire the
probabilities

530

Acquire parent
dominance information

540

Calculate full CPT

550

Store CPT

Figure 5

**600**

Put copy of parent nodes
in sorted list P_list.
NP is number of parent
nodes, P=1.

**610**

P==NP+1  —YES→  END  **620**

NO

**611**

Display for node P of P_list a
sortable list of its states and an option-
box with option 'positive' and 'negative'.

**612**

Sorted list of states, with
option 'positive' or 'negative'

**613**

Store inputted sorted list of states
together with selected option

**614**

P=P+1

Figure 6

700 — Create sorted list of states of the node S_list, with highest state first. NS is the number of states, NP the number of parent nodes, S=1.

710 — Reorder S_list

720 — S==NS+1
  YES → 724 — S=1
  NO →

721 — States of the parent nodes Sp_S for which the probability of state S conditional on Sp_S, Prob(S | Sp_S), is maximal.

722 — Store Sp_S in with Sp_list

723 — S=S+1

730 — S==NS+1
  YES → 734 — P=1
  NO →

731 — Probabilities for all states conditional on element S of Sp_list, Prob(S₁,...,S_NS | Sp_S).

732 — Store Prob(S₁,...,S_NS | Sp_S) in CPT

733 — S=S+1

740 — P==NP+1
  YES →
  NO →

741 — Probabilities for highest and lowest state $S_{HL}=\{S_{NS},S_1\}$ conditional on Sp_neg_S+.

742 — Store Prob($S_{HL}$| Sp_neg_S+) in CPT

743 — P=P+1

750 — END

Figure 7

Definition of goals of the BBN construction and analysis

Definition of nodes and states

Determination of network
structure (dependencies)

Specification of CPTs

Software model construction

| Construct belief net structure | Input CPTs |
|---|---|

Analysis

Report

Computer
aided

Figure 8

Europäisches
Patentamt
European
Patent Office
Office européen
des brevets

# EUROPEAN SEARCH REPORT

Application Number

EP 08 15 8809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | Z. TANG, B. MCCABE: "Developing Complete Conditional Probability Tables from Fractional Data for Bayesian Belief Networks" JOURNAL OF COMPUTING IN CIVIL ENGINEERING, vol. 21, no. 4, 1 July 2007 (2007-07-01), pages 265-276, XP008104985 Retrieved from the Internet: URL:http://dx.doi.org/10.1061/(ASCE)0887-3 801(2007)21:4(265)> * the whole document * | 1-9 | INV. G06N7/00 |
| X | B. LITTLEWOOD, L. STRIGINI, D. WRIGHT, P.-J. COURTOIS: "Examination of Bayesian belief network for safety assessment of nuclear computer-based systems" ESPRIT PROJECT NO. 20072: DESIGN FOR VALIDATION (DEVA); TECHNICAL REPORT, no. 70, 29 September 1998 (1998-09-29), XP007908111 Retrieved from the Internet: URL:http://research.cs.ncl.ac.uk/cabernet/ www.laas.research.ec.org/deva/papers/5a.pd f> * the whole document * -& N. E. FENTON, B. LITTLEWOOD, M. NEIL, L. STRIGINI, D. R. WRIGHT, P.-J. COURTOIS: "Bayesian belief network model for the safety assessment of nuclear computer-based systems" ESPRIT PROJECT NO. 20072: DESIGN FOR VALIDATION (DEVA); TECHNICAL REPORT, no. 52, 1997, XP007908110 Retrieved from the Internet: URL:http://research.cs.ncl.ac.uk/cabernet/ www.laas.research.ec.org/deva/papers/5B.ps > * the whole document * -/-- | 1-9 | TECHNICAL FIELDS SEARCHED (IPC) G06N |

The present search report has been drawn up for all claims

| Place of search | Date of completion of the search | Examiner |
|---|---|---|
| The Hague | 8 April 2009 | Douarche, Nicolas |

EPO FORM 1503 03.82 (P04C01)

Europäisches
Patentamt

European
Patent Office

Office européen
des brevets

# EUROPEAN SEARCH REPORT

**Application Number**

EP 08 15 8809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | N. E. FENTON, M. NEIL, J. G. CABALLERO: "Using ranked nodes to model qualitative judgments in Bayesian networks" IEEE TRANSACTIONS ON KNOWLEDGE AND DATA ENGINEERING, vol. 19, no. 10, 29 May 2007 (2007-05-29), pages 1420-1432, XP011191981 Retrieved from the Internet: URL:http://dx.doi.org/10.1109/TKDE.2007.1073> | 1-9 | |
| D,A | M. P. WELLMAN: "Fundamental concepts of qualitative probabilistic networks" ARTIFICIAL INTELLIGENCE, vol. 44, no. 3, August 1990 (1990-08), pages 257-303, XP000140329 Retrieved from the Internet: URL:http://dx.doi.org/10.1016/0004-3702(90)90026-V> * the whole document * | 1-9 | |
| D,A | DRUZDZEL M J; VAN DER GAAG L C: "Elicitation of probabilities for belief networks: combining qualitative and quantitative information" PROCEEDINGS OF THE 11TH CONFERENCE ON UNCERTAINTY IN ARTIFICIAL INTELLIGENCE (UAI'95), 18 August 1995 (1995-08-18), - 20 August 1995 (1995-08-20) pages 141-148, XP007908137 Retrieved from the Internet: URL:http://www.pitt.edu/~druzdzel/psfiles/uai95.pdf> * the whole document * | 1-9 | **TECHNICAL FIELDS SEARCHED (IPC)** |

The present search report has been drawn up for all claims

| Place of search | Date of completion of the search | Examiner |
|---|---|---|
| The Hague | 8 April 2009 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006020568 A

**Non-patent literature cited in the description**

- **in the 1980s by Kim ; Pearl.** *BBNs,* 1980
- **Druzdzel, M. J. ; Van Der Gaag, L. C.** Elicitation of probabilities for belief networks: combining qualitative and quantitative information. *Proceedings of the eleventh conference on uncertainty in artificial intelligence,* 1995
- Information Science and Statistics. **Jensen, F.** Bayesian Networks and Decision Graphs. Springer, 2001
- **Kim, J. ; Pearl, J.** A computational model for causal and diagnostic reasoning in inference engines. *8th International Joint Conference on Artificial Intelligence,* 1983
- **Tang, Z. ; Mccabe, B.** Developing complete conditional probability tables from fractional data for Bayesian belief networks. *Journal of Computing in Civil Engineering,* 2007, vol. 21, 265-276
- **Wisse, B. W. ; Gosliga, S. P. V. ; Elst, N. P. ; Barros, A. I.** *Relieving the elicitation burden of Bayesian belief networks,* 2008